# EUROPÄISCHE PATENTSCHRIFT

(11) **EP 2 941 410 B1**
(45) Veröffentlichungstag und Bekanntmachung des Hinweises auf die Patenterteilung: **24.07.2019**
(21) Anmeldenummer: 13811521.7
(22) Anmeldetag: 19.12.2013
(51) Int. Cl.: C04B 41/70, E04G 23/02

(54) **VERFAHREN ZUR INSTANDSETZUNG EINES ZEMENTÖSEN SYSTEMS**
METHOD FOR REPAIRING A CEMENTITIOUS SYSTEM
PROCÉDÉ DE RÉPARATION D'UN SYSTÈME CIMENTEUX

(30) Priorität: 07.01.2013 EP 13150406
(43) Veröffentlichungstag der Anmeldung: 11.11.2015
(73) Patentinhaber: Sika Technology AG, 6340 Baar (CH)
(72) Erfinder: DÜNNE, Thomas, 48691 Vreden (DE)
(74) Vertreter: Sika Patent Attorneys
(86) Internationale Anmeldenummer: PCT/EP2013/077366
(87) Internationale Veröffentlichungsnummer: WO 2014/106590

(56) Entgegenhaltungen:
- EP-A1- 0 264 541

## Beschreibung

### Technisches Gebiet

Die Erfindung betrifft ein Verfahren zur Instandsetzung eines zementösen Systems sowie das mittels dieses Verfahrens erhältliche zementöse System.

### Stand der Technik

Die meisten heute in Betrieb befindlichen Trinkwasserbehälter bestehen aus mineralischen zementgebundenen Konstruktionsbaustoffen mit Auskleidungen aus unterschiedlichen Werkstoffen. Derartige Trinkwasserbehälter, insbesondere solche auf Basis von Stahlbeton, sind vielfältig im Einsatz. Die Lebensdauer der Betoninnenflächen beträgt etwa 20 Jahre, was zu einem Bedarf an Instandsetzungsprodukten führt. Überwiegend werden zementgebundene Systeme als Instandhaltungsprodukte eingesetzt. Bei diesen Systemen handelt es sich um sogenannte poröse Baustoffe, welche natürlichen Angriffsmechanismen des Trinkwassers ausgesetzt sind. Dies führt langfristig zur Zerstörung der Instandsetzungsprodukte.

Mittlerweile ist der Schadensmechanismus, der die Instandsetzungsprodukte, d. h. die zementgebundenen Systeme zerstört, bekannt. Dabei spielen verschieden Angriffsmechanismen, wie beispielsweise Auslaugen, lösender Angriff und hydrolytische Korrosion, eine Rolle.

Bekannte Systeme versuchen, die mögliche Auslaugung, d.h. den Verlust bzw. Abbau von Calciumhydroxid (Ca(OH)₂), durch Einschränkung des Diffusionsvermögens zu minimieren. Hierbei spielt insbesondere die Porosität der eingesetzten Instandsetzungsprodukte eine Rolle.

Bei der Umsetzung von Zement mit Wasser werden in komplexen chemischen Reaktionen die sogenannten Hydratphasen gebildet, wobei die Calciumsilikathydrate (CSH-Phasen) den größten Anteil darstellen. Daneben werden etwa 20% Calciumhydroxid, bezogen auf das Zementgewicht, freigesetzt. Das Calciumhydroxid ist zum überwiegenden Teil als Feststoff in der Zementmatrix eingelagert. Der geringere Teil ist in der Porenlösung, mit der das Porensystem zementgebundener Werkstoffe gefüllt ist, gelöst. Diese Lösung ist für den relativ hohen pH-Wert von etwa 12,3 bis 13,0 eines zementgebundenen Werkstoffes verantwortlich.

Das anstehende Wasser unterscheidet sich deutlich von der Zusammensetzung der Porenlösung. Daraus resultieren Konzentrationsunterschiede, die zu einem Transport, der als Diffusion bezeichnet wird, führen. Die gelösten Ionen aus der Beschichtung wandern in das anstehende Trinkwasser, was zu einer Auslaugung des Zements führt. Aufgrund des größeren Konzentrationsunterschiedes findet die Diffusion verstärkt bei weichem Wasser, d.h. bei Wasser, das arm an Alkalimetallen ist, statt, wobei sich vor allem die in der zementgebundenen Beschichtung befindlichen Alkali- und Erdalkalimetalle, wie beispielsweise Natrium-, Kalium-, Magnesium- und Calciumionen, mobilisieren lassen. Da aufgrund der höheren Löslichkeit die Natrium-, Kalium-, und Magnesiumionen enthaltenden chemischen Verbindungen mehr oder minder vollständig in der Porenlösung gelöst sind, werden diese im Vergleich zu den Calciumionen schnell ausgelaugt. Die bereits erwähnten Hydradationsprodukte, d.h. die CSH-Phasen, stehen dabei mit dem Porenwasser in einem chemischen Gleichgewicht.

Kommt es nun bei ständigem Wasserkontakt zur Reduktion der CalciumionenKonzentration in der Porenlösung, so wird zunächst das in der Zementmatrix eingelagerte feste Calciumhydroxid gelöst, um das Gleichgewicht aufrecht zu erhalten. Dieser Vorgang läuft so lange ab, bis das gesamte Calciumhydroxid ausgelaugt ist. Anschließend werden die in den CSH-Phasen gebundene Calciumionen freigesetzt, um das chemische Gleichgewicht zwischen Festphase (Zement) und Flüssigphase (Porenlösung) zu stabilisieren. Der weiter voranschreitende Transport der Calciumionen in das anstehende Wasser führt letztendlich zur vollständigen Auslaugung und damit zum Abbau der zementgebundenen Beschichtung. Der Grad der Auslaugung, welcher erst nach dem kompletten Abbau der Beschichtung optisch durch Absanden erkennbar wird, kann analytisch beispielsweise durch die Bestimmung des Calciumhydroxid-Gehaltes sowie die Veränderung der Porosität quantitativ erfasst werden.

Alle bekannten Ansätze gehen davon aus, dass in einem Mörtel eine gewisse Menge an Calciumhydroxid chemisch gebunden werden kann und je nach Belastung nach einem bestimmten Zeitraum diese abgebaut wird und der Betonersatz keine Widerstandskraft mehr aufweist. Um diesen Abbauprozess zu verlangsamen wird insbesondere versucht den Mörtel von außen oder durch Anpassung seiner Rezeptur vor diesem Auslaugprozess zu schützen.

Die bekannten Maßnahmen in Bezug auf die Anpassung der Rezeptur und Vorgaben zu den Applikationsverfahren haben den Zweck die Gesamtporosität des Mörtels zu reduzieren und so eine maximal erreichbare Dichtigkeit der hergestellten Oberfläche zu bewirken, wodurch der Auslaugprozess möglichst lang hinausgezögert werden soll. Diese Maßnahmen haben jedoch ihre Grenzen. So dürfen beispielsweise bestimmte organische Inhaltsstoffe aufgrund von staatlichen Vorschriften nur begrenzt eingesetzt werden und können neben den gewünschten Effekten auch nachteilige Eigenschaften im Mörtel bewirken, da organische Inhaltsstoffe als Nährboden für Bewuchs gelten, der für eine eventuelle Aufkeimung des Wassers verantwortlich sein kann. Ferner sind den bekannten Maßnahmen insofern Grenzen gesetzt, dass beispielsweise der Wasser / Zement- Wert nicht beliebig gesenkt werden kann, da ansonsten der Mörtel nicht mehr verarbeitbar wäre. Wesentlicher Nachteil der bekannten Ansätze ist aber, dass diese lediglich das Ziel verfolgen, den Auslaugprozess zu verlangsamen. Dies führt jedoch zeitlich nur zu einem begrenzten Erfolg, da der Auslaugprozess eben nicht vollständig verhindert werden kann.

EP 0264541 A beschreibt ein Verfahren zur Tiefensanierung von mit Baustahl armierten Bauwerken, wobei die sanierte Betonoberfläche mit der Lösung eines modifizierten Alkalisilikats getränkt wird.

### Darstellung der Erfindung

Es ist Aufgabe der vorliegenden Erfindung, die Nachteile des Standes der Technik zu überwinden und ein Verfahren zur Instandsetzung eines zementösen Systems bereitzustellen, welches den Abbau von Instandsetzungsprodukten reduziert und damit zu einer deutlichen Verlängerung der Lebensdauer derselben führt.

Die Aufgabe konnte überraschenderweise durch ein Verfahren gemäß Anspruch 1 zur Instandsetzung eines zementösen Systems gelöst werden, das folgende Schritte umfasst:
a) Befestigung eines mit Öffnungen versehenen Füllkörpers mit Abstand an dem instandzusetzenden zementösen System,
b) Aufbringen von Mörtel auf das instandzusetzende zementöse System und auf den mit Öffnungen versehenen Füllkörper und
c) Einbringen eines einen Alkalispeicher enthaltenden Zements in den mit Öffnungen versehenen Füllkörper, so dass der einen Alkalispeicher enthaltende Zement in Kontakt mit dem Mörtel steht.

Im Gegensatz zum Stand der Technik, der nur zeitlich begrenzt den Auslaugprozess minimiert, geht die vorliegende Erfindung einen völlig anders gelagerten Weg. Die vorliegende Erfindung zielt nur sekundär darauf ab, den Abbau des Alkalidepots, welches in geringen Mengen im Porenwasser, aber auch in kristalliner Form vorliegt, zu vermindern. Vielmehr liegt der Kernpunkt der vorliegenden Erfindung darin, ausreichend Alkalireserven dauerhaft zur Verfügung zu stellen, d. h. dem Auslaugprozess wird dadurch entgegengewirkt, dass genügend Calciumhydroxid zur Verfügung gestellt wird, so dass der Abbau der Instandsetzungsprodukte wesentlich verzögert und deren Langlebigkeit deutlich erhöht wird.

Die vorliegende Erfindung führt daher zu einer erhöhten Widerstandskraft der Instandsetzungsprodukte, vor allem des Mörtels, gegen äußere Angriffe aus deren eigenen Matrix. Das erfindungsgemäße Verfahren hat nicht das primäre Ziel den Auslaugprozess zu verhindern, sondern stellt darauf ab, ausreichend Alkalidepot zur Verfügung zu stellen.

Das erfindungsgemäße Verfahren stellt dem Mörtel damit ein zusätzliches Alkalidepot zur Verfügung, welches in einem geschlossenen System innerhalb der Mörtelmatrix als Alkalispeicher zur Verfügung steht und den Abbauprozess erheblich verlangsamt. Das Alkalidepot ist nicht chemisch gebunden. Auf diese Art und Weise wird erreicht, dass der eingesetzte Mörtel eine erhöhte Widerstandskraft gegen äußere Angriffe aus seiner eigenen Matrix bilden kann.

Das erfindungsgemäße Verfahren zeichnet sich auch dadurch aus, dass die eingesetzten Mittel auf einfache Art und Weise kostengünstig bereitgestellt werden können.

Mit dem erfindungsgemäßen Verfahren können nahezu alle bekannten zementösen Systeme instandgesetzt werden. Bevorzugt handelt es sich bei dem zementösen System um Mörtel oder Beton.

Der Füllkörper ist mit Öffnungen versehen, damit ein Kontakt zwischen dem Alkalispeicher enthaltenden Zement und dem aufgebrachten Mörtel entsteht.

In einer bevorzugten Ausführungsform handelt es sich bei dem mit Öffnungen versehenen Füllkörper um einen gelochten Füllkörper, vorzugsweise ein Rohr, besonders bevorzugt ein Hohlrohr, und ganz besonders bevorzugt um ein Hohlrohr aus zwei Halbschalen. Derartige Konstruktionen haben den Vorteil, dass sie leicht herstellbar sind, und dass in diesen mehr Zement gespeichert werden kann als es eine normale Mörtelmatrix ohne negative Beeinflussung der Mörtelkennwerte könnte.

Der Durchmesser der Öffnungen beträgt vorzugsweise 0,2 bis 0,8 mm, insbesondere etwa 0,5 mm. Kommt ein Rohr zum Einsatz, dann hat dieses vorzugsweise einen Durchmesser von 3 bis 16, besonders bevorzugt von 6 bis 12 mm.

An das Material des Füllkörpers sind keine besonderen Anforderungen zu stellen. Dieses kann beispielsweise aus unlegierten und legierten Stählen, Edelstahl oder Schwarzstahl aufgebaut sein.

Der in Schritt b) des erfindungsgemäßen Verfahrens eingesetzte Mörtel unterliegt keinen Beschränkungen. Es ist jedoch von Vorteil, wenn dieser bestimmten Anforderungen genügt, damit dieser in der Trinkwasserversorgung zum Einsatz kommen kann.

In einer bevorzugten Ausführungsform genügt der in Schritt b) eingesetzte Mörtel daher der technischen Regel DVGW, Arbeitsblatt W 300, Ausgabe 06/2005, Arbeitsblatt W 270, Ausgabe 11/2007 und Arbeitsblatt W 347, Ausgabe 05/2006 (Deutscher Verein des Gas- und Wasserfaches e.V., technisch-wissenschaftlicher Verein, Josef-Wirmer-Str. 1 - 3, D-53123 Bonn). Ferner ist es von Vorteil, wenn der in Schritt b) eingesetzte Mörtel der DAfStb-Richtlinie "Schutz und Instanzsetzung von Betonteilen", Ausgabe Oktober 2001 (Deutscher Ausschuss für Stahlbeton e.V., Budapester Str. 31, 10787 Berlin, genügt.

Bei dem in Schritt b) aufzubringenden Mörtel handelt es sich vorzugsweise um einen Instandsetzungsmörtel bzw. einen Spritzmörtel. Beispielsweise können Sika-110 HD, Sika-120 HD, Sika-130 HD, Sika Cem Gunit-212SF, Sika Cem Gunit-212S (alle erhältlich von Sika Deutschland GmbH) eingesetzt werden.

Vorzugsweise beträgt die Dicke der Mörtelschicht 10 bis 40 mm, besonders bevorzugt von 15 bis 30 mm.

Es ist bevorzugt, dass zwischen der Randzone der Mörtelschicht (0 bis 2 mm) und der Mitte der Mörtelschicht ein Porositätsgefälle existiert. Dies hat den Vorteil, dass der Hydrolysevorgang deutlich verlangsamt abläuft. Vorzugsweise beträgt das Porositätsgefälle ≥ 1 Vol. %.

In einer bevorzugten Ausführungsform wird als der einen Alkalispeicher enthaltende Zement eine Zementsuspension eingesetzt. Diese hat den Vorteil, dass sie hochreaktiv, hinsichtlich des Zementgehaltes und dessen Mahlfeinheit hochkonzentriert und sehr fließfähig ist. Unter einer Zementsuspension wird hier ein Gemisch aus Mikrofeinstzement bzw. Ultrafeinstzement und Wasser verstanden.

In einer weiteren bevorzugten Ausführungsform wird als Zement bzw. Zementsuspension ein Zement bzw. eine Zementsuspension eingesetzt, bei dem bzw. bei der sämtliche Teilchen eine Teilchengröße von kleiner 20 µm, besonders bevorzugt von kleiner 16 µm und ganz besonders bevorzugt von kleiner 10 µm, aufweisen. Kleinere Teilchen führen zu dem Vorteil, dass der Zement bzw. die Zementsuspension dünnflüssiger ist, so dass dieser bzw. diese noch in kleinste Hohlräume und Bohrungen eindringen kann.

An den einzusetzenden Zement bzw. die einzusetzende Zementsuspension sind keine besonderen Anforderungen zu stellen. So können beispielsweise Zement und Zementsuspensionen beruhend auf Portlandzement, Portlandhüttenzement, Portlandsilicastaubzement, Portlandpuzzolanzement, Portlandflugaschezement, Portlandschieferzement, Portlandkalksteinzement, Portlandkompositzement, Hochofenzement, Puzzolanzement und Kompositzement eingesetzt werden.

Beispielsweise kann als Zementsuspension Tricodur (erhältlich von Sika Deutschland GmbH) eingesetzt werden.

In einer bevorzugten Ausführungsform wird als Alkalispeicher eine calciumhaltige Verbindung eingesetzt. Bei dieser handelt es sich vorzugsweise um Calciumhydroxid (Ca(OH)₂). Der Einsatz von Calciumhydroxid (Ca(OH)₂) führt zu dem Vorteil, dass die physikalischen Kennwerte des Mörtels nicht nachteilig beeinflusst werden.

Besonders bevorzugt ist es, dass der mit Öffnungen versehene Füllkörper vollständig in den Mörtel eingebettet ist, da dadurch das Korrodieren des Füllkörpers unterbunden wird.

In einer bevorzugten Ausführungsform wird beim erfindungsgemäßen Verfahren nach Schritt b) und vor Schritt c) eine übliche Nutzoberfläche bereitgestellt. Dies bedeutet, dass nach Einbettung des Füllkörpers in dem Mörtel eine glatte, poren- und lunkerfreie Oberfläche, die leicht zu reinigen ist, bereitgestellt wird.

Der in Schritt b) des erfindungsgemäßen Verfahrens aufzubringende Mörtel wird vorzugsweise im Nassspritzverfahren, im Trockenspritzverfahren oder mittels Handauftrag aufgebracht. Das Nassspritzverfahren hat den Vorteil, dass hohe Spritzleistung, geringer Rückprall und geringe Staubentwicklung erzielt werden können, während das Trockenspritzverfahren den Vorteil aufweist, dass bei hohen Förderweiten, Spritzpausen ohne Reinigungsaufwand an den Maschinen und mit einer einfachen Maschinentechnik gearbeitet werden kann. Das Aufbringen des Mörtels mittels Handauftrag ist technisch wenig aufwändig.

Das Einbringen des einen Alkalispeicher enthaltenden Zements bzw. der einen Alkalispeicher enthaltenden Zementsuspension in Schritt c) des erfindungsgemäßen Verfahrens erfolgt vorzugsweise mittels Injektionstechnik. Dadurch wird der Kontakt zwischen dem den Alkalispeicher enthaltendem Zement und dem Mörtel optimiert. Der Druck beträgt vorzugsweise größer 0 bis 40 bar, besonders bevorzugt größer 0 bis 20 bar. Letzterer Druckbereich hat den Vorteil, dass auch langsam abbindende Mörtel zeitlich angepasst bearbeitet werden können bzw. frühzeitig der Füllkörper befüllt werden kann.

Das erfindungsgemäße Verfahren kann überall dort eingesetzt werden, wo eine klassische Betoninstandsetzung durchgeführt wird und die Instandsetzungsprodukte, insbesondere der Mörtel, aufgrund äußerer Angriffe, insbesondere Feuchtigkeit, einer vorzeitigen Hydrolyse ausgesetzt sind und unter Umständen aus technischen Gründen nicht mit zusätzlichen Schichten geschützt werden können oder dürfen. Dies gilt beispielsweise für Bauwerke, die nicht mit diffusionsdichten Schichten belegt werden dürfen, oder für Bauwerke die nicht mit Baustoffen geschützt werden dürfen, beispielsweise solche, die organische Inhaltsstoffe enthalten.

In einer besonders bevorzugten Ausführungsform handelt es sich bei dem instandzusetzenden zementösen System um ein zementöses System, das einer Dauerfeuchtigkeitsbelastung, insbesondere Wasser, ausgesetzt ist.

In einer weiteren bevorzugten Ausführungsform handelt es sich bei dem zementösen System um eine Innenfläche von Wasserbehältern, vorzugsweise um eine Innenfläche von Trinkwasserbehältern.

Bei dem zementösen System kann es sich aber auch vorzugsweise um eine Innenfläche von Abwasserbauwerken handeln.

Es ist ein zementöses System mittels des voranstehend geschilderten Verfahrens erhältlich. Dieses enthält daher das zementöse System an sich sowie den mit Öffnungen versehenen Füllkörper, den Mörtel und den Alkalispeicher enthaltenden Zement.

Ferner betrifft die vorliegende Erfindung ein zementöses System, das das zementöse System an sich, einen mit Öffnungen versehenen Füllkörper, Mörtel und einen einen Alkalispeicher enthaltenden Zement, der sich in dem mit Öffnungen versehenen Füllkörper befindet und mit dem Mörtel in Kontakt steht, umfasst. Die vorstehend im Zusammenhang mit dem erfindungsgemäßen Verfahren genannten besonderen Ausführungsformen gelten analog für das erfindungsgemäße zementöse System.

Im Folgenden wird die vorliegende Erfindung anhand Figur (1) näher erläutert, ohne auf diese besondere Ausführungsform beschränkt zu sein:
Ein mit Öffnungen versehener Füllkörper (1) wird am instandzusetzenden zementösen System (2) angebracht. Anschließend wird der mit Öffnungen versehene Füllkörper (1) vollständig in den Instandsetzungsmörtel Sika-130HD (3) eingebettet. Die Oberfläche wird gefüllt und geglättet, so dass eine übliche fertige Oberfläche erhalten wird. Wenn der Mörtel (3) noch leicht manipulierbar ist, wird der mit Öffnungen versehene Füllkörper (1) unter einem Druck von etwa 15 bar mit der Zementsuspension Tricodur (4) gefüllt bzw. verpresst. Diese Zementsuspension (4) dient dann, sobald der Instandsetzungsmörtel ausgehärtet ist, als Calciumhydroxidspeicher. Über die Öffnungen stellt sich ein natürlicher Kontakt zwischen der Zementsuspension (4) und dem Mörtel (3) ein. Auf diese Weise wird letzterer kontinuierlich mit Calciumhydroxid versorgt, so dass dem Auslaugprozess dauerhaft entgegengewirkt wird und der ansonsten stattfindende Abbauprozess deutlich verlangsamt wird.

### Bezugszeichenliste

1 = mit Öffnungen versehener Füllkörper
2 = instandzusetzendes zementöses System
3 = Mörtel
4 = Zementsuspension

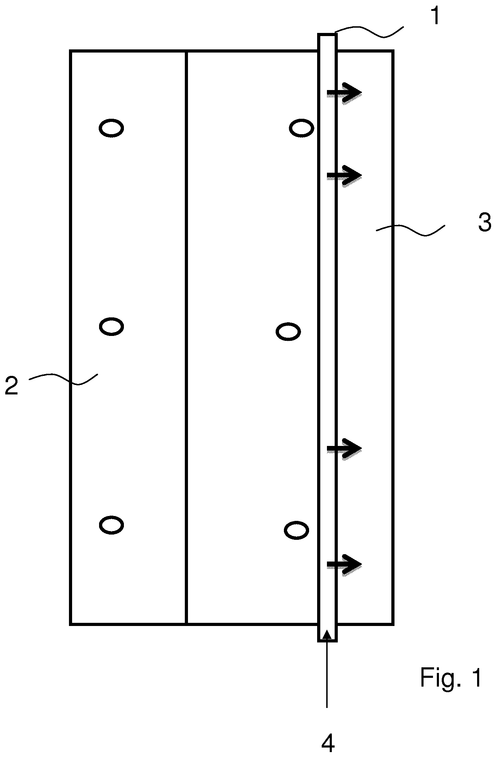

## Patentansprüche

1. Verfahren zur Instandsetzung eines zementösen Systems, das folgende Schritte umfasst:
a) Befestigung eines mit Öffnungen versehenen Füllkörpers mit Abstand an dem instandzusetzenden zementösen System,
b) Aufbringen von Mörtel auf das instandzusetzende zementöse System und auf den mit Öffnungen versehenen Füllkörper und
c) Einbringen eines einen Alkalispeicher enthaltenden Zements in den mit Öffnungen versehenen Füllkörper, so dass der einen Alkalispeicher enthaltende Zement in Kontakt mit dem Mörtel steht.

2. Verfahren nach Anspruch 1, wobei es sich bei dem zementösen System um Mörtel oder Beton handelt.

3. Verfahren nach einem der vorangegangenen Ansprüche, wobei als der mit Öffnungen versehene Füllkörper ein gelochter Füllkörper, vorzugsweise ein Rohr, besonders bevorzugt ein Hohlrohr, und ganz besonders bevorzugt ein Hohlrohr aus zwei Halbschalen, eingesetzt wird.

4. Verfahren nach einem der vorangegangenen Ansprüche, wobei der in Schritt b) eingesetzte Mörtel der technischen Regel DVGW, Arbeitsblatt W 300, Arbeitsblatt W 270 und Arbeitsblatt W 347 sowie der DAfStb-Richtlinie, genügt.

5. Verfahren nach einem der vorangegangenen Ansprüche, wobei als der einen Alkalispeicher enthaltender Zement eine Zementsuspension eingesetzt wird.

6. Verfahren nach einem der vorangegangenen Ansprüche, wobei als Zement ein Zement, bei dem sämtliche Teilchen eine Teilchengröße von kleiner 20 µm, besonders bevorzugt von kleiner 16 µm, und ganz besonders bevorzugt von kleiner 10 µm aufweisen, eingesetzt wird.

7. Verfahren nach einem der vorangegangenen Ansprüche, wobei der Zement auf Portlandzement oder Hochofenzement beruht.

8. Verfahren nach einem der vorangegangenen Ansprüche, wobei als Alkalispeicher eine calciumhaltige Verbindung, vorzugsweise Calciumhydroxid (Ca(OH)₂), eingesetzt wird.

9. Verfahren nach einem der vorangegangenen Ansprüche, wobei der mit Öffnungen versehene Füllkörper vollständig in dem Mörtel eingebettet ist.

10. Verfahren nach einem der vorangegangenen Ansprüche, wobei nach Schritt b) und vor Schritt c) eine übliche Nutzoberfläche bereitgestellt wird.

11. Verfahren nach einem der vorangegangenen Ansprüche, wobei das Aufbringen des Mörtels in Schritt b) im Nassspritzverfahren, im Trockenspritzverfahren oder mittels Handauftrag erfolgt.

12. Verfahren nach einem der vorangegangenen Ansprüche, wobei das Einbringen des einen Alkalispeicher enthaltenden Zements in Schritt c) mittels Injektionstechnik, vorzugsweise bei einem Druck von größer 0 bis 40 bar, besonders bevorzugt bei einem Druck von größer 0 bis 20 bar, erfolgt.

13. Verfahren nach einem der vorangegangenen Ansprüche, wobei das zementöse System einer Dauerfeuchtigkeitsbelastung, insbesondere Wasser, ausgesetzt ist.

14. Verfahren nach einem der vorangegangenen Ansprüche, wobei es sich bei dem zementösen System um eine Innenfläche von Wasserbehältern, vorzugsweise von Trinkwasserbehältern, oder um eine Innenfläche von Abwasserbauwerken handelt.

15. Zementöses System, umfassend
a) das zementöse Sytem an sich
b) einen mit Öffnungen versehenen Füllkörper,
c) Mörtel und
d) einen einen Alkalispender enthaltenden Zement, der sich in dem mit Öffnungen versehenen Füllkörper befindet und mit dem Mörtel in Kontakt steht.

## Claims

1. Method for restoring a cementitious system, comprising the following steps:
a) Securing a filling body provided with openings at a distance from said cementitious system to be restored,
b) Applying mortar to the cementitious system to be restored and to said filling body provided with openings, and
c) Introducing a cement containing an alkali storage system into the filling body provided with openings so that the cement containing an alkali storage system is in contact with the mortar.

2. Method according to claim 1, wherein the cementitious system is mortar or concrete.

3. Method according to one of the foregoing claims, where the filling body provided with openings is a filling body with holes, preferably a pipe, especially a hollow pipe, and very specially a hollow pipe made from two half shells.

4. Method according to one of the foregoing claims, wherein the mortar used in step b) complies with the technical rules of the GGWU, working page W 300, working page W 270, and working page W 347, and the GCRC guideline.

5. Method according to one of the foregoing claims, wherein a cement suspension is used as the cement containing an alkali storage system.

6. Method according to one of the foregoing claims, wherein a cement is used as the cement in which all particles exhibit a size of less than 20 µm, especially preferred of less than 16 µm, and most especially preferred of less than 10 µm.

7. Method according to one of the foregoing claims, wherein the cement is based on Portland cement or blast furnace cement.

8. Method according to one of the foregoing claims, wherein a compound containing calcium, preferably calcium hydroxide (Ca(OH)₂) is used as the alkali storage system.

9. Method according to one of the foregoing claims, wherein the filling body provided with openings is completely embedded in the mortar.

10. Method according to one of the foregoing claims, wherein, after step b) and before step c), a customary effective surface is made available.

11. Method according to one of the foregoing claims, wherein the mortar is applied in step b) in a wet spraying process, in a dry spraying process or by manual application.

12. Method according to one of the foregoing claims, wherein the cement containing an alkali storage system is inserted in step c) using an injection technique, preferably at a pressure greater than 0 up to 40 bar, and especially preferred greater than 0 to 20 bar.

13. Method according to one of the foregoing claims, wherein the cementitious system is subjected to long-duration moisture loading, especially water.

14. Method according to one of the foregoing claims, wherein the cementitious system is an inner surface of water containers, preferably of potable water containers, or an inner surface of waste water structures.

15. Cementitious system, comprising
a) the cementitious system per se
b) a filling body provided with openings,
c) mortar and
d) a cement containing an alkali donor, which is in the filling body provided with openings and is in contact with the mortar.

## Revendications

1. Procédé de réparation d'un système cimentaire, qui comprend les étapes suivantes :
a) la fixation sur le système cimentaire à réparer, avec un écart par rapport à celui-ci, d'un corps de remplissage muni d'ouvertures,
b) l'application de mortier sur le système cimentaire à réparer et sur le corps de remplissage muni d'ouvertures, et
c) l'introduction d'un ciment contenant un accumulateur d'alcalis dans le corps de remplissage muni d'ouvertures, de telle sorte que le ciment contenant un accumulateur d'alcalis soit en contact avec le mortier.

2. Procédé selon la revendication 1, selon lequel le système cimentaire consiste en du mortier ou du béton.

3. Procédé selon l'une quelconque des revendications précédentes, selon lequel un corps de remplissage perforé, de préférence un tube, de manière particulièrement préférée un tube creux, et de manière tout particulièrement préférée un tube creux constitué par deux demi-coques, est utilisé en tant que corps de remplissage muni d'ouvertures.

4. Procédé selon l'une quelconque des revendications précédentes, selon lequel le mortier utilisé à l'étape b) satisfait la régulation technique DVGW, fiche W 300, fiche W 270 et fiche W 347, ainsi que la directive DAfStb.

5. Procédé selon l'une quelconque des revendications précédentes, selon lequel une suspension de ciment est utilisée en tant que ciment contenant un accumulateur d'alcalis.

6. Procédé selon l'une quelconque des revendications précédentes, selon lequel un ciment dans lequel toutes les particules présentent une taille de particule inférieure à 20 µm, de manière particulièrement préférée inférieure à 16 µm, et de manière tout particulièrement préférée inférieure à 10 µm, est utilisé en tant que ciment.

7. Procédé selon l'une quelconque des revendications précédentes, selon lequel le ciment est à base de ciment Portland ou de ciment de haut fourneau.

8. Procédé selon l'une quelconque des revendications précédentes, selon lequel un composé contenant du calcium, de préférence l'hydroxyde de calcium (Ca(OH)₂) est utilisé en tant qu'accumulateur d'alcalis.

9. Procédé selon l'une quelconque des revendications précédentes, selon lequel le corps de remplissage muni d'ouvertures est entièrement incorporé dans le mortier.

10. Procédé selon l'une quelconque des revendications précédentes, selon lequel une surface utile usuelle est préparée après l'étape b) et avant l'étape c).

11. Procédé selon l'une quelconque des revendications précédentes, selon lequel l'application du mortier à l'étape b) a lieu par le procédé de pulvérisation par voie humide, par le procédé de pulvérisation par voie sèche ou par application manuelle.

12. Procédé selon l'une quelconque des revendications précédentes, selon lequel l'introduction du ciment contenant un accumulateur d'alcalis à l'étape c) a lieu par une technique d'injection, de préférence à une pression de plus de 0 à 40 bar, de manière particulièrement préférée à une pression de plus de 0 à 20 bar.

13. Procédé selon l'une quelconque des revendications précédentes, selon lequel le système cimentaire est exposé à une sollicitation durable par de l'humidité, notamment à de l'eau.

14. Procédé selon l'une quelconque des revendications précédentes, selon lequel le système cimentaire consiste en une surface intérieure de contenants d'eau, de préférence de contenants d'eau potable, ou en une surface intérieure d'ouvrages destinés aux eaux usées.

15. Système cimentaire, comprenant :
a) le système cimentaire, sur lequel se trouve
b) un corps de remplissage muni d'ouvertures,
c) du mortier et
d) un ciment contenant un accumulateur d'alcalis, qui se trouve dans le corps de remplissage muni d'ouvertures et en contact avec le mortier.
